# EUROPÄISCHE PATENTSCHRIFT

(11) **EP 2 301 792 B1**
(45) Veröffentlichungstag und Bekanntmachung des Hinweises auf die Patenterteilung: **17.08.2016**
(21) Anmeldenummer: 10009220.4
(22) Anmeldetag: 06.09.2010
(51) Int. Cl.: B60N 2/01, B60N 2/07

(54) **Fahrzeug mit einer geteilten Rückbank**
Vehicle with a partitioned rear bench
Véhicule doté d'une banquette arrière séparée

(30) Priorität: 23.09.2009 DE 102009042460
(43) Veröffentlichungstag der Anmeldung: 30.03.2011
(73) Patentinhaber: Johnson Controls GmbH, 51399 Burscheid (DE)
(72) Erfinder: Eckenroth, Dirk, 51465 Bergisch Gladbach (DE); Röbkes, Holger, 42651 Solingen (DE)
(74) Vertreter: Schwöbel, Thilo K.

(56) Entgegenhaltungen:
- FR-A3- 2 916 167
- JP-A- H11 245 847
- JP-A- 2006 160 178

## Beschreibung

Die vorliegende Erfindung betrifft ein Fahrzeug mit einer geteilten Bank, die ein erstes Teil und ein zweites Teil aufweist.

Derartige Bänke werden im Fahrzeugbereich hinter dem Fahrer bzw. dem Beifahrersitz angeordnet und bieten mehreren Personen Platz. Diese Bänke sind oftmals geteilt, wobei jedoch, gemäß dem Stand der Technik, die Teile nicht unabhängig voneinander, beispielsweise in eine Easy-Entry-Position, verstellbar sind. In einem weiteren Stand der Technik sind die Teile der Bank unabhängig verstellbar, aber diese Konzepte weisen eine große Anzahl von rohbaufesten Schienen auf.

Das Dokument FR 2916167 beschreibt ein Fahrzeng entsprechend dem Oberbegriff des Anspruchs 1.

Es war deshalb die Aufgabe der vorliegenden Erfindung ein Fahrzeug zur Verfügung zu stellen, dass die Nachteile des Standes der Technik nicht aufweist.

Gelöst wird die Aufgabe mit einem Fahrzeug mit einer geteilten Bank, die ein erstes Teil und ein zweites Teil aufweist, wobei jeder Teil an jeweils zwei karosseriefesten Schienen gelagert und unabhängig von dem anderen Teil verschiebbar vorgesehen ist und eine Schiene als gemeinsames Lager für den ersten und für den zweiten Teil dient.

Die vorliegende Erfindung betrifft ein Fahrzeug mit einer geteilten Bank. Diese Bank bietet mehreren Personen vorzugsweise drei Personen Platz und ist in der Regel im Bereich hinter dem Fahrer- bzw. dem Beifahrersitz angeordnet. Weiterhin erfindungsgemäß ist die Bank geteilt, wobei ein beliebiges Teilungsverhältnis vorliegen kann. Vorzugsweise beträgt das Teilungsverhältnis jedoch 50:50, 60:40 oder 2/3:1/3. Die erfindungsgemäße Bank kann jedoch auch drei oder mehr Teile aufweisen, die jeweils die gleiche oder unterschiedliche Breiten aufweisen können. Die Teile der Bank sind jeweils separate Bauteile, die beispielsweise unabhängig voneinander längsverstellt werden können. Die Teile der Bank können jedoch untereinander verbunden sein oder einander teilweise überlappen.

Die Bank besteht demnach aus einem ersten und einem zweiten Teil. Jedes dieser Teile weist eine separate Rückenlehne und ein separaten Sitzteil auf, die jedoch, wenn die Teile fluchtend angeordnet sind, eine durchgehende Fläche bilden. Die Rückenlehne ist vorzugsweise drehbar an dem Sitzteil gelagert, so dass eine Komfortverstellung vorgenommen werden kann oder die Rückenlehne in eine Verstaustellung überführt werden kann. Auch zu Easy-Entry Zwecken kann die Rückenlehne um die Drehachse nach vorne geneigt werden.

Erfindungsgemäß ist jeder Teil der Bank an jeweils zwei karosseriefesten Schienen gelagert und unabhängig voneinander entlang dieser Schienen verschiebbar vorgesehen. Jeder Teil der Bank weist dafür, vorzugsweise rechts und links je ein Verbindungselement auf, mit denen der Sitzteil jeweils an einer Schiene befestigt ist. Weiterhin erfindungsgemäß dient eine Schiene als gemeinsames Lager sowohl für den ersten als auch für den zweiten Teil der Rückbank, d.h. sowohl der erste als auch der zweite Teil sind jeweils an ihrer einander zugewandten Seite an einer gemeinsamen Schiene angeordnet.

Zur Befestigung einer Bank mit einer Teilung sind damit minimal nur 3 Schienen notwendig.

Vorzugsweise sind im Bereich der Bank vier parallele Schienen angeordnet, falls beispielsweise für das entsprechende Fahrzeug z. B. eine Links - und eine Rechtslenkervariante vorgesehen sind.

Weiterhin bevorzugt ist der Abstand der äußersten Schiene und der dazu benachbarten Schiene an die Breite des zweiten Sitzteils angepasst.

Weiterhin bevorzugt ist der Abstand der nicht benachbarten Schiene an die Breite des ersten Sitzteils angepasst.

Insbesondere wenn die Bank mehr als zwei Teile aufweist, kann vorzugsweise jedes Teil jede Position innerhalb der Bank einnehmen.

Vorzugsweise sind alle Schienen äquidistant angeordnet.

In einer weiteren bevorzugten Ausführungsform der vorliegenden Erfindung sind die Verbindungselemente, die im Bereich einer Schiene angeordnet sind und direkt benachbart sind zueinander winklig vorgesehen. Vorzugsweise ist dabei ein Verbindungselement senkrecht und das andere in einem spitzen Winkel dazu vorgesehen. Vorzugsweise weist ein Verbindungselement, insbesondere das senkrecht angeordnete Verbindungselement, eine Ausnehmung auf, in die das winklig angeordnete Verbindungselement vorzugsweise hineinragt

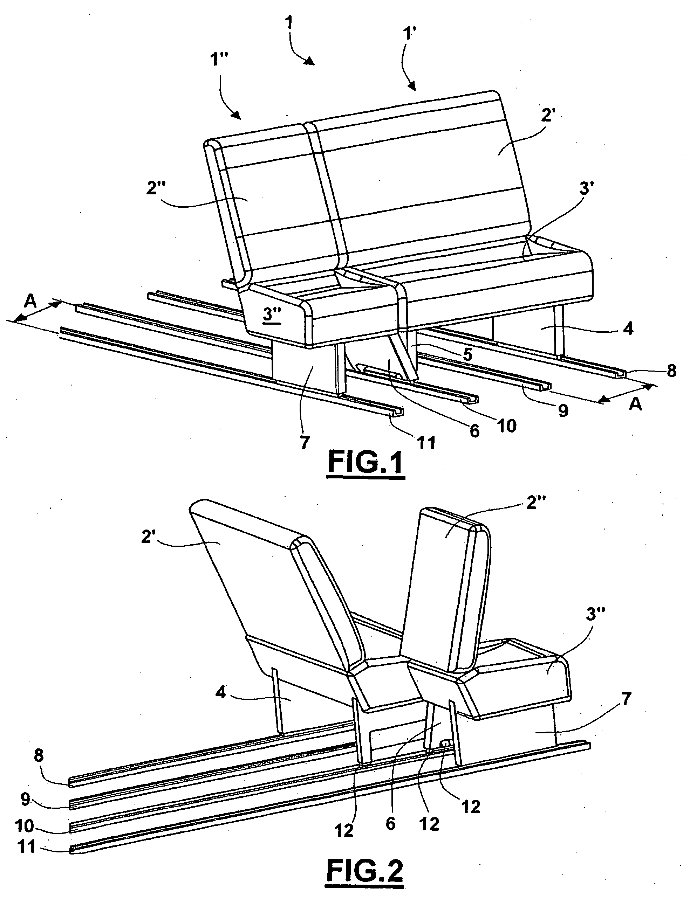

Im Folgenden wird die Erfindung anhand der Figuren 1 und 2 erläutert. Diese Erläuterungen sind lediglich beispielhaft und schränken den allgemeinen Erfindungsgedanken nicht ein.
- **Figur 1**: zeigt die erfindungsgemäße Rückbank.
- **Figur 2**: zeigt die erfindungsgemäße Rückbank gemäß Figur 1, wobei ein Teil nach vorne verschoben ist.

Figur 1 zeigt die erfindungsgemäße Rückbank 1, die ein erstes Teil 1' und ein zweites Teil 1" aufweist. Das erste Teil 1' umfasst 2/3 der Rückbank und das zweite Teil 1" 1/3 der Rückbank. Jedes der beiden Teile weist eine Rückenlehne 2', 2" und ein Sitzteil 3', 3" auf. Jedes Teil der Rückenlehne 2', 2" ist drehbar an dem jeweiligen Sitzteil 3', 3" vorgesehen, wobei die jeweilige Verdrehung der Rückenlehnenteile unabhängig voneinander erfolgen kann. Die Verdrehung der Rückenlehne kann zum einen zu Komfortzwecken aber auch zur Überführung der Rückenlehne in eine Verstauposition, in der sich die Rückenlehne im Wesentlichen parallel zu dem Sitzteil befindet oder zur Überführung des Sitzes in eine Easy-Entry-Stellung verstellt werden. Im Bereich der Bank 1 sind vier parallele äquidistante Schienen 8 - 10 angeordnet, entlang derer die jeweiligen Teile 1', 1" der Rückenbank unabhängig voneinander längsverschieblich angeordnet sind. Der Abstand A der Schienen ist an die Breite des zweiten, kleineren Teils 1 " angepasst. Der erste Teil 1' weist unterhalb des Sitzteils 3' rechts und links Verbindungselemente 4, 5 auf, die diesen Teil der Bank mit den Schienen 8, 10 verbindet. Diese Verbindungselemente 4, 5 und damit das erste Teil 1 könnten entlang der Schienen 8, 10 in eine beliebige Position unabhängig von dem zweiten Teil 1" verbracht und dort arretiert werden. Des Weiteren kann der erste Teil zur Einnahme einer Easy-Entry-Stellung unabhängig von den zweiten Teil 1" entlang der Schienen 8, 10 verschoben werden. Auch der zweite Teil 1" ist mittels der Verbindungselemente 7, 6 an zwei Schienen 10, 11 mit der Karosserie des Fahrzeuges verbunden und entlang dieser Schienen längverschieblich und in der jeweiligen gewünschten Position arretierbar vorgesehen. Die Verschiebung in Längsrichtung kann zu Komfort oder zur Einnahme einer Easy-Entry-Stellung vorgenommen werden. Wie eindeutig zu erkennen ist, sind das Verbindungselement 5 des ersten Teils 1' und das Verbindungselement 6 des zweiten Teils 2' an derselben Schiene 10 angeordnet, wobei das Verbindungselement 5 senkrecht und das Verbindungselement 6 in einem spitzen Winkel angeordnet ist. Dadurch dass zwei Verbindungselemente an einer Schiene vorgesehen sind, kann bei einer zweiteiligen Bank auf eine Schiene und bei einer dreiteiligen Rückbank sogar auf zwei Schienen verzichtet werden. Trotzdem sind die einzelnen Teile völlig unabhängig voneinander in Längsrichtung einstellbar. Das senkrechte Verbindungselement weist in seinem unteren Bereich eine Ausnehmung auf, in die das winklig angeordnete Verbindungselement hineinragt.

Figur 2 zeigt Bank gemäß Figur 1, wobei der zweite Sitzteil 2" unabhängig von dem ersten Teil 1 in eine Easy-Entry-Stellung verbracht worden ist. Dabei ist die Rückenlehne 2" unabhängig von der Rückenlehne 2' nach vorne geklappt und dann der gesamte Teil1" der Rückbank nach vorne in die Easy-Entry-Stellung geschoben worden. Vorzugsweise weisen mindestens ein vorzugsweise beide Teile der Bank eine Memory-Funktion auf, mit der der jeweilige Teil selbständig seine ursprüngliche Stellung wiederfindet, wenn er von der Easy-Entry- in die Gebrauchsstellung rückgeführt wird.

Der Fachmann erkennt, dass es aufgrund der äquidistanten Anordnung der Schienen möglich ist, die Position des ersten und des zweiten Teils miteinander zu vertauschen. Der erste Teil ist dann an den Schienen 9 und 11 und der zweite Teil an den Schienen 8 und 9 angeordnet. Des Weiteren erkennt der Fachmann, dass es die Schienenanordnung auch ermöglich die Bank 1 in drei Teile aufzuteilen. In diesem Teil sind an zwei Schienen 9, 10 jeweils zwei Verbindungselemente angeordnet.

### Bezugszeichenliste:

- 1: Fahrzeugbank
- 1': erster Teil
- 1": zweiter Teil
- 2: Rückenlehne
- 2': erster Teil
- 2": zweiter Teil
- 3: Sitzteil
- 3': erster Teil
- 3": zweiter Teil
- 4: Verbindungselement der Sitzbank an der Schiene
- 5: Verbindungselement der Sitzbank an der Schiene
- 6: Verbindungselement der Sitzbank an der Schiene
- 7: Verbindungselement der Sitzbank an der Schiene
- 8: Schiene
- 9: Schiene
- 10: Schiene
- 11: Schiene
- 12: Befestigungselement
- A: Abstand der Schienen

## Patentansprüche

1. Fahrzeug mit einer geteilten Bank (1), die ein erstes Teil (1') und ein zweites Teil (1 ") aufweist, wobei der erste Teil (1') Verbindungselemente (4, 5) aufweist, die den ersten Teil (1') mit parallelen karosseriefesten Schienen (8, 10) verbinden, wobei der zweite Teil (1 ") Verbindungselemente (6,7) aufweist, die den zweiten Teil (1") mit parallelen karosseriefesten Schienen (10,11) verbinden, wobei der erste r Teil (1')) unabhängig von dem zweiten Teil (1") in Längsrichtung verschiebbar vorgesehen ist, wobei das Verbindungselement (5) des ersten Teils (1') und das Verbindungselement (6) des zweiten Teils (1") an derselben, als gemeinsames Lager dienenden karosseriefesten Schiene (10) angeordnet sind, **dadurch gekennzeichnet ,dass** das Verbindungselement (5) des ersten Teils (1') senkrecht und das Verbindungselement (6) des zweiten Teils (1") in einem spitzen Winkel angeordnet sind und das senkrecht angeordnete Verbindungselement (5) in seinem unteren Bereich eine Ausnehmung aufweist, in die das winklig angeordnete Verbindungselement (6) hineinragt.

2. Fahrzeug nach Anspruch 1, **dadurch gekennzeichnet, dass** es im Bereich der Bank (1) vier parallele karosseriefeste Schienen (8, 9, 10, 11) aufweist.

3. Fahrzeug nach Anspruch 2, **dadurch gekennzeichnet, dass** der Abstand (A) zwischen einer der äußeren karosseriefesten Schienen (8, 11) und der jeweiligen dazu benachbarten karosseriefesten Schiene (9, 10) an die Breite des zweiten Teils (1") der Bank (1) angepasst ist.

4. Fahrzeug nach Anspruch 2 oder 3, **dadurch gekennzeichnet, dass** der Abstand zwischen nicht benachbarten karosseriefeste Schienen an die Breite des ersten Teils Bank (1) angepasst ist.

5. Fahrzeug nach einem der Ansprüche 2 - 4, **dadurch gekennzeichnet, dass** die parallelen karosseriefesten Schienen (8, 9, 10, 11) äquidistant angeordnet sind.

6. Fahrzeug nach einem der voranstehenden Ansprüche, **dadurch gekennzeichnet, dass** der erste und der zweite Teil (1', 1") der Bank jeweils ein Sitzteil (3', 3") aufweist, das jeweils mit zwei Verbindungselementen (4, 5, 6,7) mit zwei der parallelen karosseriefesten Schienen (8, 9, 10, 11) verbunden ist.

7. Fahrzeug nach einem der voranstehenden Ansprüche, **dadurch gekennzeichnet, dass** der erste und/oder der zweite Teil (1', 1") der Bank eine Memory-Funktion aufweist, mit der der erste und/oder der zweite Teil (1', 1 ") selbständig seine ursprüngliche Stellung wiederfindet, wenn er von einer Easy-Entry--Stellung in eine Gebrauchsstellung rückgeführt wird.

## Claims

1. Vehicle with a partitioned bench (1) which has a first part (1') and a second part (1"), wherein the first part (1') has connecting elements (4, 5) which connect the first part (1') to parallel body-mounted rails (8, 10), wherein the second part (1") has connecting elements (6, 7) which connect the second part (1") to parallel body-mounted rails (10, 11), wherein the first part (1') is provided so as to be displaceable in the longitudinal direction independently of the second part (1"), wherein the connecting element (5) of the first part (1') and the connecting element (6) of the second part (1") are arranged on the same body-mounted rail (10) which serves as a common bearing, **characterized in that** the connecting element (5) of the first part (1') is arranged perpendicularly and the connecting element (6) of the second part (1") is arranged at an acute angle, and the perpendicularly arranged connecting element (5) has, in its lower region, a recess, into which the connecting element (6) arranged at an angle projects.

2. Vehicle according to Claim 1, **characterized in that** it has four parallel body-mounted rails (8, 9, 10, 11) in the region of the bench (1).

3. Vehicle according to Claim 2, **characterized in that** the distance (A) between one of the outer body-mounted rails (8, 11) and the respective body-mounted rail (9, 10) adjacent thereto is adapted to the width of the second part (1") of the bench (1).

4. Vehicle according to Claim 2 or 3, **characterized in that** the distance between non-adjacent body-mounted rails is adapted to the width of the first part of the bench (1).

5. Vehicle according to one of Claims 2-4, **characterized in that** the parallel body-mounted rails (8, 9, 10, 11) are arranged equidistantly.

6. Vehicle according to one of the preceding claims, **characterized in that** the first and the second part (1', 1") of the bench each have a seat part (3', 3") which is in each case connected by two connecting elements (4, 5, 6, 7) to two of the parallel body-mounted rails (8, 9, 10, 11).

7. Vehicle according to one of the preceding claims, **characterized in that** the first and/or the second part (1', 1") of the bench has a memory function with which the first and/or second part (1', 1") automatically regains its original position when it is returned from an easy-entry position into a use position.

## Revendications

1. Véhicule doté d'une banquette divisée (1), qui présente une première partie (1') et une deuxième partie (1''), la première partie (1') présentant des éléments de connexion (4, 5) qui relient la première partie (1') à des rails parallèles (8, 10) fixés à la carrosserie, la deuxième partie (1") présentant des éléments de connexion (6, 7) qui relient la deuxième partie (1") à des rails parallèles (10, 11) fixés à la carrosserie, la première partie (1') étant prévue de manière à pouvoir coulisser dans la direction longitudinale indépendamment de la deuxième partie (1''), l'élément de connexion (5) de la première partie (1') et l'élément de connexion (6) de la deuxième partie (1") étant disposés sur le même rail (10) fixé à la carrosserie et servant de support commun, **caractérisé en ce que** l'élément de connexion (5) de la première partie (1') est disposé perpendiculairement et l'élément de connexion (6) de la deuxième partie (1") est disposé suivant un angle aigu et l'élément de connexion (5) disposé perpendiculairement présente, dans sa région inférieure, un évidement dans lequel pénètre l'élément de connexion (6) disposé suivant un certain angle.

2. Véhicule selon la revendication 1, **caractérisé en ce qu'**il présente, dans la région de la banquette (1), quatre rails parallèles fixés à la carrosserie (8, 9, 10, 11).

3. Véhicule selon la revendication 2, **caractérisé en ce que** la distance (A) entre l'un des rails extérieurs fixés à la carrosserie (8, 11) et le rail respectif (9, 10) adjacent à celui-ci, fixé à la carrosserie, est adaptée à la largeur de la deuxième partie (1'') de la banquette (1).

4. Véhicule selon la revendication 2 ou 3, **caractérisé en ce que** la distance entre des rails non adjacents, fixés à la carrosserie, est adaptée à la largeur de la première partie de la banquette (1).

5. Véhicule selon l'une quelconque des revendications 2 à 4, **caractérisé en ce que** les rails parallèles fixés à la carrosserie (8, 9, 10, 11) sont disposés de manière équidistante.

6. Véhicule selon l'une quelconque des revendications précédentes, **caractérisé en ce que** la première et la deuxième partie (1', 1'') de la banquette présentent chacune une partie de siège (3', 3'') qui est connectée à chaque fois par deux éléments de connexion (4, 5, 6, 7) à deux des rails parallèles fixés à la carrosserie (8, 9, 10, 11).

7. Véhicule selon l'une quelconque des revendications précédentes, **caractérisé en ce que** la première et/ou la deuxième partie (1', 1'') de la banquette présentent une fonction de mémoire avec laquelle la première et/ou la deuxième partie (1', 1'') retrouve automatiquement sa position d'origine lorsqu'elle est ramenée d'une position facilitant l'entrée dans une position d'utilisation.
